# FASCICULE DE BREVET EUROPEEN

(11) **EP 3 741 251 B1**
(45) Date de publication et mention de la délivrance du brevet: **03.04.2024**
(21) Numéro de dépôt: 20171470.6
(22) Date de dépôt: 27.04.2020
(51) Int. Cl.: A45F 3/44, E04H 12/22, G01C 15/02, A63B 71/02, E01F 9/685, A63C 19/06, B25D 1/00, E04H 17/08, E04H 17/22

(54) **PIEU MULTIFONCTION**
MULTIFUNKTIONSMAST
MULTIFUNCTIONAL PILE

(30) Priorité: 02.05.2019 FR 1904621
(43) Date de publication de la demande: 25.11.2020
(73) Titulaire: Caron, Christelle, 93220 Gagny (FR)
(72) Inventeur: Caron, Christelle, 93220 Gagny (FR)
(74) Mandataire: Tranvouez, Edern Morgan

(56) Documents cités:
- DE-A1- 4 230 776
- DE-A1-102008 011 869
- FR-A1- 2 737 525
- US-A- 3 417 525
- US-A1- 2008 236 059
- US-B1- 7 735 166

## Description

La présente invention concerne un pieu multifonction.

Ce type de pieu est conçu pour être enterré dans le sol afin de servir de support à différents objets destinés à émerger dudit sol et aptes à remplir différentes fonctions.

La demande de brevet FR2711926 décrit un implant d'herbe synthétique destiné à être fixé dans le sol au moyen d'un pieu. Cet implant comprend l'herbe synthétique et le pieu, ledit pieu étant fileté afin de pouvoir être enfoncé dans le sol manuellement en lui imprimant un mouvement rotatif et de poussée. Une fois que l'implant est correctement positionné, le pieu est enfoui dans le sol sans émerger de celui-ci, seuls les brins d'herbe synthétique saillant du sol. Or, un tel pieu présente le double inconvénient de n'être dimensionné que pour assurer une seule fonction, à savoir supporter de l'herbe synthétique, et de présenter une asymétrie en raison de la présence de son pas de vis, nécessitant des manipulations contraignantes lors de son enfoncement dans le sol et ne garantissant pas forcément une orientation verticale dudit pieu dans le sol.

D'autres pieux sont également connus des documents US 3 417 525 A, US 7 735 166 B1, DE 10 2008 011869 A1, DE 42 30 776 A1, US 2008/236059 A1 et FR 2 737 525 A1.

Un pieu selon l'invention possède des caractéristiques structurelles lui permettant d'être enfoncé dans le sol, de façon aisée et reproductible, tout en étant apte à supporter une multiplicité d'objets ayant des fonctions variées.

L'invention a pour objet un pieu destiné à être enfoncé dans le sol pour servir de support à un objet, ledit pieu possédant une forme conique se terminant en pointe.

Selon l'invention, le pieu comprend au moins deux ergots ayant chacun une pente destinée à favoriser un enfoncement du pieu dans le sol, et une butée destinée à empêcher le retrait du pieu dans un sens qui est opposé à celui dudit enfoncement, ledit pieu possédant un orifice destiné à recevoir un embout apte à supporter un objet. Les ergots ont ainsi une double fonction : celle de faciliter l'enfoncement du pieu dans le sol et celle de figer la position du pieu dans ledit sol en empêchant un retrait aisé de celui-ci dudit sol. Un pieu selon l'invention possède également un caractère d'universalité, car l'embout peut revêtir toute sorte de forme pour remplir une fonction particulière, la seule contrainte étant que cet embout possède une partie apte à coopérer avec l'orifice du pieu afin de pouvoir être solidarisé à celui-ci. Un tel embout peut par exemple servir à fixer un tuyau d'arrosage, une lampe ou un drapeau, les applications étant très nombreuses et variées. L'embout peut être arrimé au pieu par tout moyen, comme par exemple un vissage ou un clippage. Avantageusement, le pieu est destiné à être enfoncé dans le sol selon une direction sensiblement verticale. Préférentiellement, le pieu est destiné à demeurer sous la surface du sol. De façon préférentielle, le pieu est en matière plastique. Il est supposé que le pieu possède un axe de révolution, qui est confondu avec un axe longitudinal et central dudit pieu. Avantageusement, les ergots et le pieu sont réalisés dans le même matériau et forment une pièce commune monobloc, fabriquée lors d'une même opération. Pour un pieu selon l'invention, l'enfoncement dans le sol s'effectue par un simple coulissement de préférence vertical, sans forcément avoir recourt à une mise en rotation du pieu autour de son axe de révolution.

Selon l'invention, chaque ergot est délimité par trois faces triangulaires, dont une première surface s'étend dans un plan qui est perpendiculaire à un axe longitudinal et central du pieu et qui constitue la butée, et dont une deuxième et une troisième surface prennent naissance sur le pieu et se rejoignent au niveau d'une ligne de crête dont la pente est supérieure à celle dudit pieu. Autrement dit, les ergots sont chacun profilés de façon à favoriser l'enfoncement du pieu dans le sol à travers l'existence de la deuxième et de la troisième surface-et de façon à empêcher un retrait facile dudit pieu grâce à la présence de la première surface.

Selon une caractéristique possible de l'invention, le pieu possède trois rangées d'ergots comprenant chacune au moins deux ergots, chacune desdites rangées étant disposée autour de l'axe longitudinal et central du pieu. De cette manière, les ergots sont répartis de façon équitable et homogène le long du pieu, et permettent de favoriser l'enfoncement dudit pieu dans le sol.

Selon l'invention, le pieu comprend une première extrémité se terminant en pointe et une deuxième extrémité qui est opposée à ladite première extrémité et qui se termine par une paroi arrière, l'orifice étant situé au centre de cette paroi arrière. De cette manière, dans l'hypothèse où le pieu serait enfoncé dans le sol suivant un axe vertical, l'embout se retrouverait au-dessus dudit pieu et serait facilement accessible par un individu se tenant sur le sol.

Selon une caractéristique possible de l'invention, l'orifice est fileté et est prolongé vers l'intérieur du pieu par une cavité interne. De cette manière, pour cette configuration, il est nécessaire que l'embout possède un tronçon fileté par l'intermédiaire duquel il sera vissé dans l'orifice du pieu. L'orifice fileté constitue une entrée pour la cavité. Préférentiellement la cavité s'étend sur moins de la moitié de la longueur totale du pieu. Cette cavité participe à l'allègement du pieu et permet de loger éventuellement un objet de petite taille.

Selon une caractéristique possible de l'invention, la cavité interne enferme un élément apte à localiser l'emplacement du pieu dans le sol au moyen d'un dispositif de détection dudit élément. En effet, une fois que le pieu a été enfoncé dans le sol pour remplir une fonction particulière, il est possible de perdre sa trace puisqu'il n'émerge pas du sol. L'insertion dans le pieu d'un élément pouvant être localisé dans un plan ou pouvant faire l'objet d'une détection particulière, va permettre de retrouver rapidement le pieu qui a été enfoncé dans le sol.

Selon une caractéristique possible de l'invention, l'élément est à choisir parmi un composant électronique et un composant métallique. Le composant électronique est destiné à permettre une géolocalisation du pieu dans un plan, et le composant métallique va pouvoir être détecté au moyen d'un dispositif usuel de détection de métaux.

Selon une caractéristique possible de l'invention, la paroi arrière est bombée pour permettre de faciliter la mise en place de l'embout dans l'orifice ou son retrait de celui-ci.

Selon l'invention, la face arrière présente une gorge annulaire. Cette gorge annulaire est destinée à recevoir une extrémité cylindrique d'un outil, de manière à pouvoir enfoncer le pieu dans le sol de façon sûre et robuste, sans possibilité de voir ledit outil glisser sur le pieu.

L'invention a pour autre objet un ensemble comprenant un pieu selon l'invention.

Selon l'invention, l'ensemble comprend un embout fixé dans l'orifice dudit pieu et apte à remplir une fonction de support d'un objet spécifique.

Il est décrit de plus un outil apte à assurer un enfoncement d'un pieu selon l'invention dans le sol.

L'outil comprend une extrémité cylindrique dont le diamètre correspond au diamètre de la gorge annulaire du pieu, et une collerette élargie placée en retrait de ladite extrémité cylindrique. La distance séparant la collerette et l'extrémité cylindrique va définir la profondeur d'enfoncement du pieu dans le sol. En effet, l'outil va venir se placer au-dessus du pieu de sorte que son extrémité cylindrique soit insérée dans la gorge annulaire de la paroi arrière du pieu. Une pression du haut vers le bas, exercée sur l'outil, va alors entrainer un enfoncement du pieu dans le sol jusqu'à ce que la collerette élargie de l'outil vienne en butée contre le sol.

L'invention a pour autre objet un procédé d'enfoncement dans le sol d'un pieu selon l'invention au moyen d'un outil tels que décrit ci-dessus.

Selon l'invention, le procédé comprend les étapes suivantes :
- une étape d'insertion de l'extrémité cylindrique de l'outil dans la gorge annulaire de la face arrière du pieu,
- une étape de poussée du haut vers le bas de l'outil entraînant un enfoncement vertical du pieu dans le sol facilité par la présence des ergots,
- une étape d'arrêt de la poussée lorsque la collerette vient en butée contre le sol,
- une étape de retrait de l'outil.

L'invention a pour autre objet un kit comprenant au moins un pieu selon l'invention, un outil tels que décrit ci-dessus et au moins un embout adapté pour être fixé dans l'orifice dudit au moins un pieu et destiné à remplir une fonction spécifique. Un tel kit permet de fournir à un utilisateur tous les éléments lui permettant de procéder à l'enfoncement d'au moins un pieu dans le sol muni d'un embout adapté à son besoin.

L'invention a pour autre objet une utilisation d'au moins un pieu selon l'invention, dans une activité à choisir parmi une implantation de piquets sur un terrain afin de délimiter un enclos pour animaux, une implantation d'un drapeau, une mise en place d'un piquet émetteur RF pour un balisage d'un terrain, une mise en place d'une lampe, une mise en place d'un piquet pour monter un filet de jeu, une mise en place d'un piquet arroseur, une fixation d'un tuyau d'arrosage, une fixation d'un abri de jardin ou d'un auvent, une fixation d'un parasol, un balisage d'un terrain de sport, un balisage d'aérodrome, une attache d'un animal, une mise en oeuvre d'un jeu de raquettes basés sur une balle fixée à un élastique, une mise en oeuvre de fibres synthétique pour baliser un terrain, et un marquage de sentiers de randonnée. Il s'agit d'exemples illustratifs et non pas limitatifs d'applications, dont la mise en oeuvre de pieux selon l'invention est particulièrement adaptée.

Un pieu selon l'invention présente l'avantage de revêtir un caractère d'universalité car il peut recevoir une pluralité d'embouts différents aptes à assurer des fonctions différentes. De cette manière, le pieu peut supporter ou accrocher n'importe quel type d'objet lié à l'embout spécifique qui est monté dans le pieu. De plus, il a l'avantage d'être configuré pour être facilement enfoncé dans le sol grâce à la présence d'ergots profilés facilitant cet enfoncement et empêchant un retrait aisé dudit pieu. Il présente également l'avantage de demeurer enfoui dans le sol, sans modifier la surface du sol et sans constituer une aspérité susceptible de blesser ou de déséquilibrer un individu. Il a enfin l'avantage, de pouvoir être facilement retrouvé grâce à la présence d'une cavité dans laquelle peut être placé un élément facile à être détecté au moyen de dispositifs de détection usuels.

On donne ci-après, une description détaillée d'un mode de réalisation préféré d'un pieu, d'un outil et d'un procédé d'enfoncement selon l'invention, en se référant aux figures suivantes :
[Fig. 1] est une vue de côté d'un pieu selon l'invention,
[Fig. 2] est une vue en coupe axiale longitudinale du pieu de la figure 1,
[Fig. 3A] est une vue de côté d'un premier mode de réalisation d'un embout apte à être monté dans un pieu selon l'invention,
[Fig. 3B] est une vue du dessus du premier mode de réalisation de la figure 1A,
[Fig. 4A] est une vue de côté d'un deuxième mode de réalisation d'un embout apte à être monté dans un pieu selon l'invention,
[Fig. 4B] est une vue du dessus du deuxième mode de réalisation de la figure 4A,
[Fig. 5A] est une vue de côté d'un troisième mode de réalisation d'un embout apte à être monté dans un pieu selon l'invention,
[Fig. 5B] est une vue du dessus du troisième mode de réalisation de la figure 5A,
[Fig. 6A]] est une vue de côté d'un quatrième mode de réalisation d'un embout apte à être monté dans un pieu selon l'invention,
[Fig. 6B] est une vue du dessus du quatrième mode de réalisation de la figure 6A,
[Fig. 7A] est une vue de côté d'un mode de réalisation particulier d'un pieu selon l'invention,
[Fig. 7B] est une vue en coupe axiale longitudinale du mode de réalisation particulier de la figure 7A,
[Fig. 8] est une vue schématique de côté d'un outil servant à enfoncer dans le sol un pieu selon l'invention.

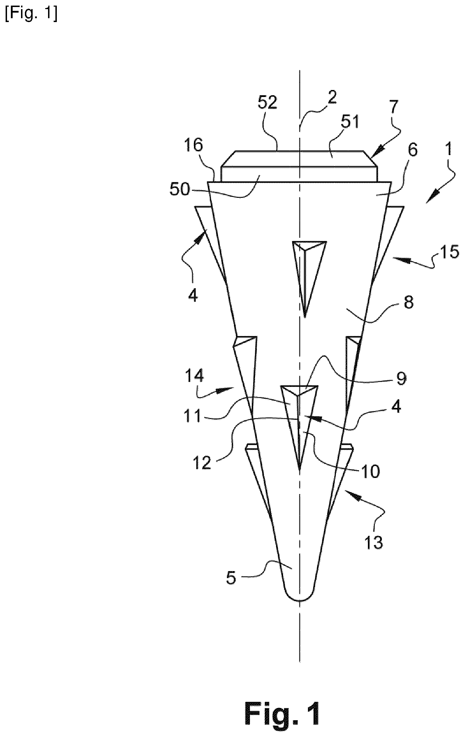

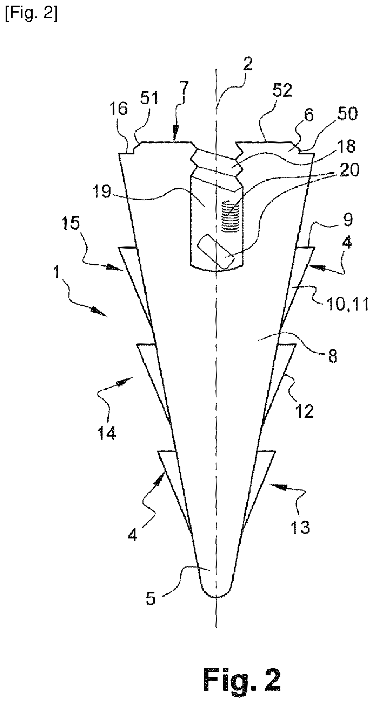

En se référant aux figures 1 et 2, un pieu 1 selon l'invention est une pièce allongée ayant une forme conique, ladite pièce possédant un axe de révolution 2 qui est confondu avec un axe longitudinal et central dudit pieu 1. Le pieu 1 présente ainsi deux extrémités 5, 6 considérées suivant un axe longitudinal 2 dudit pieu 1, dont une première extrémité 5 est pointue et dont une deuxième extrémité 6 se termine par une paroi 7 arrière s'inscrivant dans un plan qui est perpendiculaire audit axe longitudinal 2. La section transversale du pieu 1 est maximale au niveau de la deuxième extrémité 6 et minimale au niveau de l'extrémité de la pointe. La première extrémité pointue 5 ne se termine pas par une pointe acérée, mais par une pointe légèrement arrondie ne risquant pas de blesser un utilisateur lors de la manipulation dudit pieu 1.

En se référant aux figures 1, 2 et 7A la surface extérieure 8 du pieu 1 présente une pluralité d'ergots 4 identiques, délimitées chacun par trois surfaces triangulaires 9, 10, 11, dont :
- Une première surface 9 prend naissance sur la surface extérieure 8 du pieu 1 et s'étend dans un plan qui est perpendiculaire à l'axe longitudinal 2 du pieu 1, et
- Une deuxième surface 10 et une troisième surface 11 prennent naissance sur la surface extérieure 8 du pieu 1 et sur deux côtés de la première surface 9, et se rejoignent au niveau d'une ligne de crête 12 dont la pente considérée par rapport à un axe longitudinal 2 dudit pieu 1 est supérieure à celle dudit pieu 1. Selon un mode de réalisation préféré d'un pieu 1 selon l'invention, ledit pieu 1 comprend trois rangées 13, 14, 15 d'ergots 4, disposées chacune autour de l'axe de révolution 2 du pieu 1. Parmi ces trois rangées, une première rangée 13 est disposée du côté de la première extrémité pointue 5 et comprend deux ergots 4, une troisième rangée 15 est disposée du côté de la deuxième extrémité élargie 6 et comprend six ergots 4, et une deuxième rangée intermédiaire 14 située entre la première 13 et la troisième rangée 15 et qui comprend quatre ergots 4. Tous les ergots 4 sont orientées de la même manière sur le pieu 1, de sorte que la première surface triangulaire 9 soit située du côté de la deuxième extrémité élargie 6, et de sorte que la deuxième et la troisième surfaces 10, 11 triangulaires s'étendent derrière ladite première surface 9 vers la première extrémité pointue 5 du pieu 1.

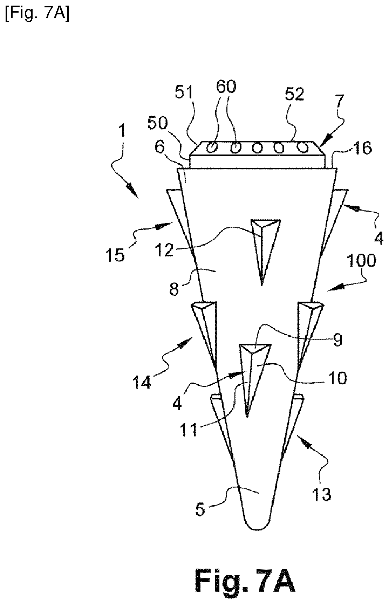

En se référant aux figures 1 et 7A, la paroi arrière 7 comprend une piste périphérique 16 plane s'inscrivant dans un plan qui est perpendiculaire à un axe longitudinal 2 du pieu 1 et une avancée centrale prenant naissance au niveau de ladite piste 16 et s'étendant vers l'extérieur du pieu 1 de façon à accroitre la longueur totale dudit pieu 1. L'avancée centrale comprend une partie cylindrique 50 prenant naissance sur la piste périphérique 16, et dont le diamètre est inférieur au diamètre externe de ladite piste 16, ladite partie cylindrique 50 étant prolongée par une partie tronconique 51 se terminant par une face plane 52. La piste périphérique 16 qui est en partie délimitée par la partie centrale 17 définit une gorge annulaire.

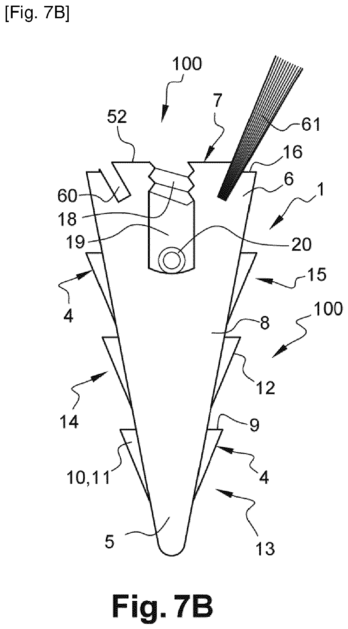

En se référant aux figures 2 et 7B, un orifice fileté 18 est réalisé dans l'avancée centrale de la paroi arrière 7, ledit orifice 18 étant cylindrique et possédant un axe de révolution qui est confondu avec l'axe de révolution 2 du pieu 1. Cet orifice 18 prend naissance sur la face plane 52 de l'avancée centrale et progresse vers l'intérieur de ladite avancée centrale. Une cavité interne 19 prolonge l'orifice fileté 18 vers l'intérieur du pieu 1. Cette cavité interne 19 a préférentiellement une forme cylindrique et possède un axe de révolution qui est aligné sur l'axe de révolution 2 du trou fileté 18. Le diamètre de la cavité 19 est sensiblement égal à celui du trou fileté 18 et sa longueur est avantageusement supérieure à la moitié de la longueur totale du pieu 1. Cette cavité 19 participe à l'allègement du pieu 1 et permet également de loger un élément 20 apte à permettre la localisation dudit pieu 1 au moyen d'un dispositif de détection déjà connu. Cet élément 20 peut par exemple être un composant électronique qui va permettre de géolocaliser le pieu 1 sur une carte, un composant électronique qui transmettra des informations, ou un composant métallique qui pourra être détecté avec des dispositifs usuels de détection de métaux.

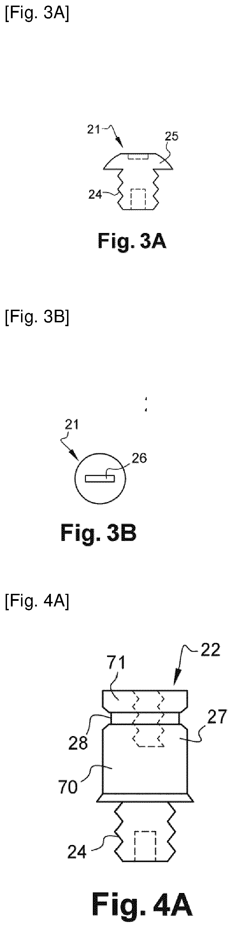

En se référant aux figures 3A, 3B, 4A, 4B, 5A, 5B, 6A et 6B un embout 21, 22, 23, 55 vient se fixer par vissage dans l'orifice fileté 18 du pieu 1 afin de permettre au pieu 1 de supporter un objet quelconque. Le seul point commun que doivent posséder tous ces embouts 21, 22, 23, 55 est d'être muni d'un tronçon fileté 24 apte à venir se visser dans l'orifice fileté 18 du pieu 1. Le reste de l'embout 21, 22, 23, 55 est configuré en fonction de l'utilisation que l'on souhaite faire dudit embout 21, 22, 23, 55.

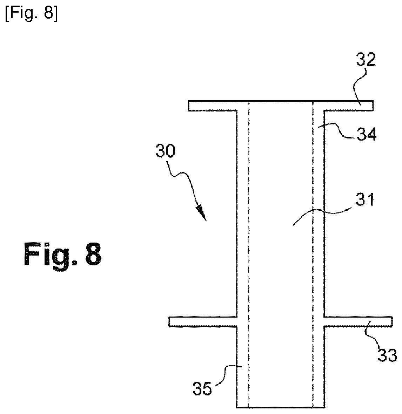

En se référant à la figure 8, un outil 30 qui est parfaitement adapté à la mise en place d'un pieu 1 selon l'invention dans le sol, comprend un corps cylindrique 31 creux, et deux collerettes planes 32, 33 placées autour dudit corps 31. Ces deux collerettes 32, 33 sont parallèles et s'étendent chacune dans un plan qui est perpendiculaire à l'axe de révolution du corps cylindrique 31. Une première collerette 32 est ainsi placée au niveau d'une première extrémité 34 du corps cylindrique 31 considérée suivant un axe de révolution dudit corps 31 et va servir d'organe de préhension pour manipuler l'outil 30. Une deuxième collerette 33 est placée en retrait d'une deuxième extrémité 35 du corps 31 cylindrique, toujours considérée suivant un axe de révolution dudit corps 32.

Un procédé d'enfoncement dans le sol d'un pieu 1 selon l'invention au moyen d'un outil 30 d'enfoncement, comprend les étapes suivantes :
- une étape d'insertion de la deuxième extrémité 35 de l'outil 30 dans la gorge annulaire formée par la piste périphérique 16 de la paroi arrière 7 du pieu 1,
- une étape de positionnement de l'ensemble constitué par l'outil 30 et le pieu 1 suivant un axe vertical, ledit outil 30 étant placé sur ledit pieu 1,
- une étape de poussée du haut vers le bas de l'outil 30 entrainant un enfoncement vertical du pieu 1 dans le sol, facilité par la présence des ergots 4 dont la ligne de crête 12 présente une pente qui est supérieure à celle du pieu 1. L'enfoncement est réalisé au moyen d'un simple coulissement vertical du pieu 1 dans le sol, ne nécessitant pas une mise en rotation dudit pieu 1 comme pour le visser dans le sol. Cette étape peut être conduite par petites touches à l'aide d'un marteau, en tapant plusieurs fois sur l'outil 30.
- Une étape d'arrêt de la poussée lorsque la deuxième collerette 33 de l'outil 30 vient au contact du sol. La distance séparant la deuxième collerette 33 et la deuxième extrémité 35 de l'outil 30 va donc définir la profondeur à laquelle va être positionné le pieu 1 dans le sol par rapport à la surface dudit sol.
- une étape de retrait de l'outil 30 sans modifier la position du pieu 1 dans le sol. Une fois placé dans sa position définitive, le pieu 1 se retrouve enfoncé dans le sol en étant aligné suivant un axe vertical, son extrémité pointue 5 étant placée sous son extrémité élargie 6. Il est à noter qu'un retrait du pieu 1 du sol est rendu difficile par la présence de la première surface 9 de chaque ergot 4 jouant le rôle d'une butée anti-retour.
- une étape de vissage de l'embout souhaité 21, 22, 23, 55 dans l'orifice fileté 18 du pieu 1. Cette étape peut s'effectuer pour l'embout 21, 22, 23, 55 soit en tout début de procédé et dans ce cas le pieu 1 est enfoncé dans le sol muni de son embout 21, 22, 23, 55 soit à la fin dudit procédé.et dans ce cas ledit embout 21, 22, 23 est vissé dans le pieu 1 une fois que celui-ci aura été enfoncé dans le sol.

En se référant aux figures 3A et 3B, un premier type d'embout 21 comprend le tronçon fileté 24 prolongé par une tête élargie 25 de faible épaisseur et dotée d'une fente 26. Un tel embout 21 va servir de bouchon d'obturation pour la cavité interne 19 et pourra être vissé ou dévissé dans l'orifice 18 grâce à un outil de type tournevis dont l'extrémité sera insérée dans la fente 26.

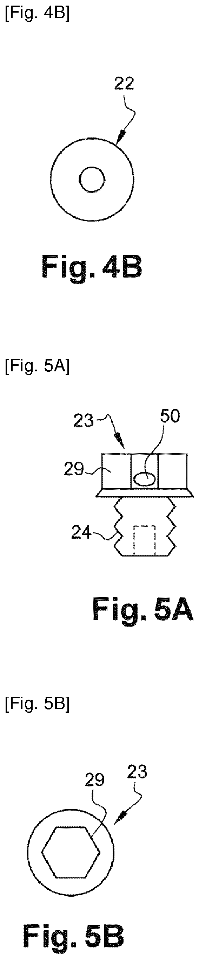

En se référant aux figures 4A et 4B, un deuxième type d'embout 22 comprend le tronçon fileté 24 prolongé par un cylindre creux 27 dont l'axe de révolution est confondu avec celui du tronçon fileté 24. Ce cylindre creux 27 présente une zone d'étranglement 28 assimilable à une gouttière et permettant de séparer une première partie cylindrique principale 70 et une deuxième partie cylindrique secondaire 71, lesdites deux parties 70, 71 ayant un diamètre sensiblement constant.

En se référant aux figures 5A et 5B, un troisième type d'embout 23 comprend le tronçon fileté 24 prolongé par une tête hexagonale 29 possédant un canal 50 traversant, reliant deux faces parallèles de ladite tête hexagonale 29.

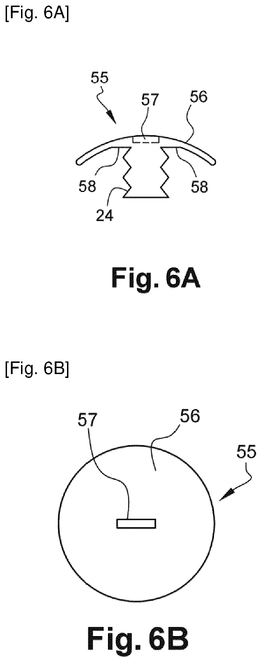

En se référant aux figures 6A et 6B, un quatrième type d'embout 55 comprend le tronçon fileté 24 prolongé par un disque 56 élargi, qui est légèrement bombé et doté d'une fente 57. Le disque 56 est dotée d'une paroi inférieure 58 plane destinée à venir au contact de la paroi plane 52 de l'avancée centrale de la paroi arrière 7 du pieu 1, ladite paroi inférieure 58 étant prolongée par une paroi annulaire périphérique bombée. Une fois que cet embout 55 a été vissée dans le pieu 1, la paroi annulaire périphérique dudit embout 55 saille radialement de la paroi arrière 7 dudit pieu1.

Voici listées ci-après quelques applications non exhaustives d'un pieu 1 selon l'invention :
A- Utilisation du pieu 1 basic :
   - Pour les clôtures, en exemple : Les bergers ont énormément de difficulté à planter les piquets (trop souples) de clôture électrique provisoire (protégeant les brebis des attaques des loups, ours, ...) dans des surfaces souvent très dures. Ce ne sera plus un problème grâce aux pieux 1 selon l'invention qu'ils pourront planter facilement à n'importe quel endroit selon leurs besoins. Ils placeront à l'intérieur de la cavité 19 du pieu 1 un élément de détection 20 et y inséreront leur piquet de clôture. A la fin de la saison, ils n'enlèveront que le piquet placé à l'intérieur de l'orifice 18 et visseront le premier type d'embout 21 ou le troisième type d'embout hexagonal 23 à trou 50 multifonction qui rendra le pieu 1 hermétique. L'année suivante, ils n'auront qu'à faire un repérage de la position des pieux 1 avec un dispositif de détection, et à remettre leurs piquets exactement au même endroit.
   - Mise en place d'un piquet habillé d'un drapeau comme utilisé aux USA pour le repérage des différentes canalisations enterrées. Il sera facile avant la tonte d'enlever le piquet, puis de le remettre exactement au même endroit après la tonte dans le pieu 1 resté en place.
   - Mise en place d'un piquet émetteur RF (Radio Fréquence) avec alimentation solaire pour positionnement par triangulation dans l'orifice 18 du pieu 1. Il sera ainsi possible de baliser de manière invisible un espace ou jardin non clôturé et prévenir la fuite d'un animal qui sera équipé d'un collier récepteur anti-fugue délimitant sa zone autorisée. Ce système de triangulation peut également être utiliser dans d'autres domaines.
   - Mise en place d'une lampe solaire dans l'orifice 18 du pieu 1 permettant l'éclairage autonome d'un jardin, la signalisation lumineuse d'un aérodrome, ou autre. Il sera facile d'enlever les lampes ou signalisations lumineuses avant la tonte de l'herbe ou l'entretien d'un espace et de les remettre en place facilement au même endroit après le travail effectué.
   - Mise en place d'un piquet dans l'orifice 18 du pieu 1 permettant d'y fixer un filet pour des jeux comme le Badminton par exemple. Après la partie, il est très facile d'enlever le matériel sans laisser d'obstacles au sol, mais en gardant la possibilité de réinstaller ce dispositif très rapidement puisque les pieux 1 enfouis resteront en place dans le sol.
   - Mise en place de piquets arroseurs (pour jardin ou pots) directement dans l'orifice 18 des pieux 1, permettant ainsi de les enlever facilement avant la tonte ou l'entretien d'un espace vert et de les remettre en place parfaitement après la tonte.
B-Utilisation du pieu avec le quatrième type d'embout 55

Un tel embout 55 a pour vocation essentielle d'apparaitre à la surface du sol comme un indicateur visuel.
- Ce quatrième type d'embout 55 peut être de différentes couleurs permettant un balisage visible mais sans être un obstacle sur les terrains en herbe, ou terrains stabilisés.
- Cet embout 55 peut être planté sur les parkings en herbe ou stabilisés pour délimiter les emplacements de stationnement.
- Cet embout 55 peut être planté sur des terrains de Baseball ou autres avec des inscriptions dessus pour marquer les distances de jeu.
- Cet embout 55 permet d'indiquer la présence de tuyaux enterrés ou autre objet enfoui dans le sol en inscrivant dessus les détails nécessaires.

### C- Utilisation du pieu 1 avec le troisième type d'embout 23 hexagonal à trou 50 multifonction :

Cet embout 23 permet de fermer de manière hermétique l'orifice 18 du pieu 1.
- Il peut être planté au pied des arbres/plantes ou dans des pots avec à l'intérieur de l'orifice 18 le nom, le descriptif et/ou les instructions de l'entretien du spécimen.
- Cet embout 23 permet de fixer les tuyaux d'arrosage au sol grâce à un collier de serrage passé dans le trou 50 multifonction.
- Cet embout 23 permet de fixer au sol les auvents ou abris de jardins grâce au passage d'une boucle (cordon) dans le trou multifonction 50. Il suffira de placer les pieux 1 aux différents emplacements souhaités (Les sardines habituellement utilisées s'arrachent très facilement et sont parfois très difficiles à mettre en place suivant la dureté du sol et les plaques en béton sont inesthétiques et forme un obstacle dangereux). Ce système peut également sécuriser des parasols ouverts et éviter qu'ils s'envolent.

Ce système n'est pas un obstacle à la tonte.

### D- Utilisation du pieu 1 avec le deuxième type d'embout 22 haut à gouttière multi-support 28 :

Cet embout 22 équipé au niveau de la gouttière 28 d'un anneau rotationnel permet d'attacher un chien ou chat à ce pieu 1 par le biais d'une chaîne. Facile à mettre en place mais également facile à enlever, ne laissant alors aucun obstacle au sol.

Cet embout 22 permet d'installer différents jeux qui seront interchangeables comme par exemple le Jokari^{®}. Une fois la fin du jeu, le pieu 1 reste en place et il suffit simplement d'enlever l'élastique. Il est possible d'y installer un autre jeu à la place.

Cet embout peut être équipé de fibres longues plantées au centre et permettant un balisage provisoire par exemple dans la neige (comme lors des jeux Olympiques) ou autre terrain. En effet, l'orifice à l'intérieur de cet embout 22 permet de planter ou coller les fibres longues.

Cet orifice est avantageusement fileté et est identique à l'orifice 18 du pieu 1, 100. De cette manière, cet embout 22 une fois visser sur le pieu 1, 100, permet de décaler vers le haut l'orifice 18 fileté du pieu 1, 100 au cas où celui-ci serait enfoui dans le sol et serait rendu difficilement accessible.

Dans l'orifice de l'embout 22, il est aussi possible de mettre un message papier ou un composant électronique apte à transmettre des informations, et de le fermer hermétiquement avec le premier type d'embout 21, assimilable à un bouchon d'obturation. Cela peut permettre un accès plus facile au message (dans les pots de fleurs ou autres...) ou une meilleure réception en cas d'utilisation d'un composant électronique. En se référant aux figures 6A et 6B, un pieu 100 selon l'invention peut également être utilisé sans forcément mettre en place un embout 21, 22, 23. En effet, dans le présent exemple, la partie centrale bombée 17 de la face arrière 7 du pieu 100 est percée de plusieurs trous 60, équitablement répartis le long d'un cercle placé autour de l'orifice 18 fileté. Le nombre de trous 60 varie avantageusement entre 6 et 12.

En se référant à la figure 6B, une gerbe 61 de fibres synthétiques est insérée dans chaque trou 60 de la face arrière 7 du pieu 100 et est fixée à celui-ci par exemple par collage (?). Lorsque le pieu 100 est enfoncé dans le sol dans sa position définitive, c'est-à-dire dans une position verticale pour laquelle l'extrémité élargie 6 est placée au-dessus de l'extrémité pointue 5 mais en dessous du niveau du sol, toutes les gerbes 61 vont émerger dudit sol vers le haut. Pour cette configuration, un embout 21, 22, 23 peut obturer l'orifice fileté 18.

Ce pieu 100 fibré permet un repérage facile et rapide puisque les gerbes synthétiques 61 rendront le pieu 100 apparent sur un terrain en terre ou dans l'herbe, mais sans représenter un obstacle aussi bien pour les personnes que pour la tonte.

Ce pieu 100 fibré permet un balisage rapide sans reprendre les mesures d'un terrain de sport pour en faciliter le traçage, ce terrain de sport pouvant par exemple être un terrain de de football, de rugby, de baseball, ... etc.

La fibre de ce pieu 100 peut être de plusieurs couleurs ce qui permet un balisage nominatif suivant les besoins.

Ce pieu 100 coloré peut être utilisé lors d'un parcourt d'orientation.

Ce pieu 100 fibré coloré peut aussi être bicolore, permettant de l'utiliser pour baliser les chemins de randonnées (en remplacement des marquages peinturés sur les arbres). Il pourrait par la même occasion être équipé d'une puce connectée à une application permettant d'obtenir des informations sur le site dans lequel on se trouve.

Tous les exemples d'utilisation d'un pieu 1, 100 selon l'invention mentionnés dans la présente description, le sont à titre purement illustratif et non pas limitatif.

Un pieu 1 selon l'invention, outre sa facilité de manipulation notamment pour l'enfoncer dans le sol grâce à la présence d'ergots 4 profilés, présente un caractère d'universalité en raison principalement de la présence de l'orifice fileté 18, qui peut, soit directement servir de réceptacle à un objet quelconque, soit recevoir un embout 21, 22, 23, 55 spécifiquement conçu pour une fonction particulière. Le pieu 1 constitue une partie commune et constante de l'invention apte à recevoir une multiplicité d'embouts 21, 22, 23, 55 élaborés chacun pour remplir une fonction particulière.

## Revendications

1. Pieu (1) destiné à être enfoncé dans le sol pour servir de support à un objet, ledit pieu (1) possédant une forme conique comprenant une première extrémité se terminant en pointe (5) et une deuxième extrémité (6) qui est opposée à ladite première extrémité (5) et qui se termine par une paroi arrière (7), et en ce qu'il possède un orifice (18) destiné à recevoir un embout (21, 22, 23) apte à supporter un objet, l'orifice (18) étant situé au centre de cette paroi arrière (7), ledit pieu comprenant au moins deux ergots (4) ayant chacun une pente (12) destinée à favoriser un enfoncement du pieu (1) dans le sol et une butée (9) destinée à empêcher le retrait du pieu (1) dans un sens qui est opposé à celui dudit enfoncement, **caractérisé en ce que** chaque ergot (4) est délimité par trois faces triangulaires (9, 10, 11), dont l'une (9) s'étend dans un plan qui est perpendiculaire à un axe longitudinal et central du pieu (1) et qui constitue la butée, et dont une deuxième et une troisième surfaces (10, 11) prennent naissance sur le pieu (1) et se rejoignent au niveau d'une ligne de crête (12) dont la pente est supérieure à celle dudit pieu (1), et **en ce que** ladite paroi arrière (7) présentant une gorge annulaire (16).

2. Pieu selon la revendication 1, **caractérisé en ce que** le pieu (1) possède trois rangées (13, 14, 15) d'ergots (4) comprenant chacune au moins deux ergots (4), et **en ce que** chacune desdites rangées (13, 14, 15) est disposée autour de l'axe longitudinal et central (2) du pieu (1).

3. Pieu selon l'une quelconque des revendications 1 ou 2, **caractérisé en ce que** l'orifice (18) est fileté et est prolongé vers l'intérieur du pieu (1) par une cavité (19) interne.

4. Pieu selon la revendication 3, **caractérisé en ce que** la cavité interne (19) enferme un élément (20) apte à localiser l'emplacement du pieu (1) dans le sol au moyen d'un dispositif de détection dudit élément (20).

5. Pieu selon la revendication 4, **caractérisé en ce que** l'élément (20) est à choisir parmi un composant électronique et un composant métallique.

6. Ensemble comprenant un pieu (1) selon l'une quelconque des revendications 1 à 5, **caractérisé en ce qu'**il comprend un embout (21, 22, 23, 55) fixé dans l'orifice (18) dudit pieu (1) et apte à remplir une fonction de support d'un objet spécifique.

7. Procédé d'enfoncement dans le sol d'un pieu (1) selon l'une quelconque des revendications 1 à 5 au moyen d'un outil (30) comprenant une extrémité cylindrique (35) dont le diamètre correspond au diamètre de la gorge annulaire (16) du pieu (1), et une collerette élargie (33) placée en retrait de ladite extrémité élargie (35) **caractérisé en ce qu'**il comprend les étapes suivantes :
Une étape d'insertion de l'extrémité cylindrique (35) de l'outil (30) dans la gorge annulaire (16) de la face arrière (7) du pieu (1),
Une étape de poussée du haut vers le bas de l'outil (30) entrainant un enfoncement vertical du pieu (1) dans le sol facilité par la présence des ergots (4),
Une étape d'arrêt de la poussée lorsque la collerette (33) vient en butée contre le sol,
Une étape de retrait de l'outil (30).

8. Kit comprenant :
- au moins un pieu (1) selon l'une quelconque des revendications 1 à 5,
- un outil comprenant une extrémité cylindrique (35) dont le diamètre correspond au diamètre de la gorge annulaire (16) du pieu (1), et une collerette élargie (33) placée en retrait de ladite extrémité élargie (35) et
- au moins un embout (21, 22, 23, 55) adapté pour être fixé dans l'orifice (18) dudit au moins un pieu (1) et destiné à remplir une fonction spécifique.

9. Utilisation d'au moins un pieu selon l'une quelconque des revendications 1 à 5 dans une activité à choisir parmi une implantation de piquets sur un terrain afin de délimiter un enclos pour animaux, une implantation d'un drapeau, une mise en place d'un piquet émetteur RF pour un balisage d'un terrain, une mise en place d'une lampe, une mise en place d'un piquet pour monter un filet de jeu, une mise en place d'un piquet arroseur, une fixation d'un tuyau d'arrosage, une fixation d'un abri de jardin ou d'un auvent, une fixation d'un parasol, un balisage d'un terrain de sport, un balisage d'aérodrome, une attache d'un animal, une mise en oeuvre d'un jeu de raquettes basés sur une balle fixée à un élastique, une mise en oeuvre de fibres synthétique pour baliser un terrain, et un marquage de sentiers de randonnée.

## Patentansprüche

1. Pfosten (1), der dazu bestimmt ist, in den Boden gerammt zu werden, um zum Tragen eines Gegenstands zu dienen, wobei der Pfosten (1) eine konische Form besitzt und ein erstes, spitz zulaufendes Ende (5) und ein zweites Ende (6) umfasst, das dem ersten Ende (5) entgegengesetzt ist und in einer Rückwand (7) endet, und dass er eine Öffnung (18) besitzt, die dazu bestimmt ist, ein Endstück (21, 22, 23) aufzunehmen, das dazu ausgebildet ist, einen Gegenstand zu tragen, wobei sich die Öffnung (18) in der Mitte dieser Rückwand (7) befindet,
wobei der Pfosten mindestens zwei Vorsprünge (4), von denen jeder eine Neigung (12) aufweist, die dazu bestimmt ist, ein Eintreiben des Pfostens (1) in den Boden zu erleichtern, und einen Anschlag (9) umfasst, der dazu bestimmt ist, das Herausziehen des Pfostens (1) in einer Richtung, die derjenigen des Eintreibens entgegengesetzt ist, zu verhindern,
**dadurch gekennzeichnet, dass** jeder Vorsprung (4) durch drei dreieckförmige Flächen (9, 10, 11) begrenzt ist, von denen sich eine (9) in einer Ebene erstreckt, die senkrecht zu einer Längs- und Mittelachse des Pfostens (1) verläuft und die den Anschlag bildet, und von denen eine zweite und eine dritte Fläche (10, 11) am Pfosten (1) entstehen und sich auf Höhe einer Kammlinie (12) treffen, deren Neigung größer ist als die des Pfostens (1), und dadurch, dass die Rückwand (7) eine ringförmige Nut (16) aufweist.

2. Pfosten nach Anspruch 1, **dadurch gekennzeichnet, dass** der Pfosten (1) drei Reihen (13, 14, 15) von Vorsprüngen (4) besitzt, die jeweils mindestens zwei Vorsprünge (4) umfassen, und dadurch, dass jede der Reihen (13, 14, 15) um die Längs- und Mittelachse (2) des Pfostens (1) herum angeordnet ist.

3. Pfosten nach einem der Ansprüche 1 oder 2, **dadurch gekennzeichnet, dass** die Öffnung (18) mit einem Gewinde versehen ist und in Richtung des Inneren des Pfostens (1) durch einen inneren Hohlraum (19) verlängert ist.

4. Pfosten nach Anspruch 3, **dadurch gekennzeichnet, dass** der innere Hohlraum (19) ein Element (20) umgibt, das dazu ausgebildet ist, den Standort des Pfostens (1) im Boden mittels einer Detektionsvorrichtung des Elements (20) zu lokalisieren.

5. Pfosten nach Anspruch 4, **dadurch gekennzeichnet, dass** das Element (20) aus einer elektronischen Komponente und einer metallischen Komponente auszuwählen ist.

6. Anordnung, die einen Pfosten (1) nach einem der Ansprüche 1 bis 5 umfasst, **dadurch gekennzeichnet, dass** sie ein Endstück (21, 22, 23, 55) umfasst, das in der Öffnung (18) des Pfostens (1) befestigt und dazu ausgebildet ist, eine Funktion des Tragens eines spezifischen Gegenstands auszuführen.

7. Verfahren zum Einbringen eines Pfostens (1) nach einem der Ansprüche 1 bis 5 in den Boden mittels eines Werkzeugs (30), das ein zylindrisches Ende (35), dessen Durchmesser dem Durchmesser der ringförmigen Nut (16) des Pfostens (1) entspricht, und einen vergrößerten Kragen (33) umfasst, der hinter dem vergrößerten Ende (35) platziert ist, **dadurch gekennzeichnet, dass** es die folgenden Schritte umfasst:
einen Schritt des Einführens des zylindrischen Endes (35) des Werkzeugs (30) in die ringförmige Nut (16) der Rückseite (7) des Pfostens (1),
einen Schritt des Drückens des Werkzeugs (30) von oben nach unten, um ein vertikales Eintreiben des Pfostens (1) in den Boden anzutreiben, das durch das Vorhandensein der Vorsprünge (4) erleichtert wird,
einen Schritt des Stoppens des Drückens, wenn der Kragen (33) am Boden zum Anliegen kommt,
einen Schritt des Entfernens des Werkzeugs (30).

8. Kit, das Folgendes umfasst:
- mindestens einen Pfosten (1) nach einem der Ansprüche 1 bis 5,
- ein Werkzeug, das ein zylindrisches Ende (35), dessen Durchmesser dem Durchmesser der ringförmigen Nut (16) des Pfostens (1) entspricht, und einen vergrößerten Kragen (33) umfasst, der hinter dem vergrößerten Ende (35) platziert ist, und
- mindestens ein Endstück (21, 22, 23, 55), das dazu ausgelegt ist, in der Öffnung (18) des mindestens einen Pfostens (1) befestigt zu werden, und dazu bestimmt ist, eine spezifische Funktion auszuführen.

9. Verwendung mindestens eines Pfostens nach einem der Ansprüche 1 bis 5 bei einer Aktivität, die auszuwählen ist aus einem Errichten von Pfählen auf einem Gelände, um ein Tiergehege abzugrenzen, einem Aufstellen einer Fahne, einem Aufstellen eines HF-Sendemasts für eine Markierung eines Geländes, einem Aufstellen einer Lampe, einem Aufstellen eines Pfahls, um ein Spielnetz zu montieren, einem Aufstellen eines Rasensprengerpfahls, einem Befestigen eines Wasserschlauchs, einem Befestigen eines Gartenhauses oder einer Überdachung, einem Befestigen eines Sonnenschirms, einer Markierung eines Sportplatzes, einer Markierung eines Flugplatzes, einem Anbinden eines Tieres, einem Durchführen eines Schlägerspiels, das auf einem an einem Gummiband befestigten Ball beruht, einem Verwenden von Kunstfasern zum Markieren eines Geländes und einer Markierung von Wanderwegen.

## Claims

1. Pile (1) intended to be driven into the ground to serve to support an object, said pile (1) having a conical shape including a first end terminating in a point (5) and a second end (6) that is opposite said first end (5) and terminates in a rear wall (7), and in that it includes an the orifice (18) fintended to receive an end-piece (21, 22, 23) adapted to support an object, the orifice (18). being situated at the centre of that rear wall (7), said pile comprising at least two lugs (4) each having a slope (12) intended to favour driving of the pile (1) into the ground and an abutment (9) intended to prevent the withdrawal of the pile (1) in a direction that is opposite to that of said driving in, **Characterised in that** each lug (4) is delimited by three triangular faces (9, 10, 11) of which one face (9) extends in a plane that is perpendicular to a longitudinal and central axis of the pile (1) and that constitutes the abutment and second and third surfaces (10, 11) of which arise on the pile (1) and are joined at the level of a crust line (12) the slope of which is greater than that of said pile (1) and **in that** the rear face (7) featuring an annual groove (16).

2. Pile according to either one of Claim 1, **characterized in that** the pile (1) has three rows (13, 14, 15) of lugs (4) each comprising at least two lugs (4), and **in that** each of said rows (13, 14, 15) is disposed around the longitudinal and central axis (2) of the pile (1).

3. Pile according to Claim 1 or 2, **characterized in that** the orifice (18) is threaded and is extended toward the interior of the pile (1) by an internal cavity (19).

4. Pile according to Claim 3, **characterized in that** the internal cavity (19) encloses an element (20) adapted to locate the position of the pile (1) in the ground by means of a device for detecting said element (20).

5. Pile according to Claim 6, **characterized in that** the element (20) is to be chosen from an electronic component and a metal component.

6. Assembly comprising a pile (1) according to any one of Claims 1 to 5, **characterized in that** it includes an end-piece (21, 22, 23, 55) fixed in the orifice (18) of said pile (1) and adapted to fulfil a function of supporting a specific object.

7. Method of driving a pile (1) according to any one of claims 1 to 5 using tool (30) including a cylindrical end (35) the diameter of which corresponds to the diameter of the annular groove (16) of the pile (1), and a widened flange (33) set back from said cylindrical end (35) **characterized in that** it includes the following steps:
a step of inserting the cylindrical end (35) of the tool (30) in the annular groove (16) on the rear face (7) of the pile (1),
a step of pushing the tool (30) downward leading to vertical driving of the pile (1) into the ground facilitated by the presence of the lugs (4),
a step of stopping pushing when the flange (33) abuts against the ground,
a step of removing the tool (30).

8. Kit comprising :
- at least one pile (1) according to any one of Claims 1 to 5,
- a tool (30) including a cylindrical end (35) the diameter of which corresponds to the diameter of the annular groove (16) of the pile (1), and a widened flange (33) set back from said cylindrical end (35) and
- at least one end-piece (21, 22, 23, 55) adapted to be fixed in the orifice (18) of said at least one pile (1) and intended to fulfil a specific function.

9. Use of at least one pile according to any one of Claims 1 to 5 in an activity to be chosen among implanting stakes in the ground in order to delimit an pen for animals, implanting a flag, placing an RF transmitter stake for marking out the ground, placing a lamp, placing a stake for erecting a games net, placing a sprinkler stake, fixing a sprinkler pipe, fixing a garden shelter or an awning, fixing a sunshade, marking out a sports field, marking out an aerodrome, attaching an animal, using a set of rackets based on a ball fixed to an elastic string, using synthetic fibres to mark out a terrain, and marking hiking paths.
